# EUROPEAN PATENT APPLICATION

(11) **EP 4 831 889 A1**
(43) Date of publication of application: **28.10.2026**
(21) Application number: 25172531.3
(22) Date of filing: 25.04.2025
(51) Int. Cl.: G06Q 10/087, B65G 1/04

(54) **ITEM RETRIEVAL CONTROL**

(71) Applicant: AutoStore Technology AS, 5578 Nedre Vats (NO)
(72) Inventor: FJELDHEIM, Ivar, 5578 Nedre Vats (NO); AUSTRHEIM, Trond, 5578 Nedre Vats (NO)
(74) Representative: Kilburn & Strode LLP

(57) **Abstract**

The disclosure relates to a controller for controlling retrieval of items stored in an automated storage and retrieval system. The controller is configured to determine (S100) to retrieve an item from the automated storage and retrieval system, determine (S105) a retrieval procedure assigned to the item, and control (S110) the automated storage and retrieval system to retrieve the item by performing the determined retrieval procedure. The automated storage and retrieval system is configured to perform a plurality of different retrieval procedures using different types of retrieval device, and items stored in the automated storage and retrieval system each have an assigned retrieval procedure of the plurality of retrieval procedures. The retrieval procedure assigned to each item corresponds to a predetermined complexity in retrieving the item.

## Description

### TECHNICAL FIELD

The disclosure relates to item retrieval in an automated storage and retrieval system. More particularly, it relates to controlling item retrieval procedures in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A controller controls the execution of storage and retrieval operations in the automated storage and retrieval system. In the aforementioned example, the controller sends instructions to the container-handling vehicles, and these instructions direct the container-handling vehicles to perform the storage and retrieval operations.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a block diagram of components of a system for item retrieval, and the control thereof, in an automated storage and retrieval system;
Fig. 6A shows a first perspective view of an exemplary robotic item-picking vehicle with a first robotic item retrieval device;
Fig. 6B shows a second perspective view of the robotic item-picking vehicle with a first robotic item retrieval device;
Fig. 6C shows a perspective view of the robotic item-picking vehicle 600 in operation on the grid;
Fig. 7 shows a perspective view of a second robotic item retrieval device;
Fig. 8 shows a perspective view of a third robotic item retrieval device;
Fig. 9 shows a flow chart of a process to retrieve an item;
Fig. 10 shows a flow chart of a detailed process to retrieve an item;
Fig. 11A shows a first perspective view of an automated storage and retrieval system configured for a plurality of retrieval procedures; and
Fig. 11B shows a second perspective view of an automated storage and retrieval system configured for a plurality of retrieval procedures.

### DETAILED DESCRIPTION

In overview, the disclosure relates to controlling item retrieval in an automated storage and retrieval system.

Different automated storage and retrieval systems can be configured with different item retrieval procedures. Some item retrieval procedures can be performed in a shorter period of time than others. However, such faster procedures may not suitable for retrieving items that involve a complex picking operation, and this can lead to failures in item retrieval. On the other hand, some retrieval procedures can be more adept to performing complex picking operations. However, such complex procedures may take a longer period of time to perform than others, and this can lead to lower item retrieval rates.

The present disclosure provides item retrieval control that balances both efficient retrieval with reduced failure in item retrieval, thereby improving operational efficiency of the automated storage and retrieval system. This is brought about through the provision of a controller for controlling retrieval of items stored in an automated storage and retrieval system. The automated storage and retrieval system can be configured to perform a plurality of different retrieval procedures using different types of retrieval device. Items stored in the automated storage and retrieval system can each have an assigned retrieval procedure of the plurality of retrieval procedures. The retrieval procedure assigned to each item can correspond to a predetermined complexity in retrieving the item. The controller can be configured to determine to retrieve an item from the automated storage and retrieval system, determine the retrieval procedure assigned to the item, and then control the automated storage and retrieval system to retrieve the item by performing the determined retrieval procedure.

### Automated storage and retrieval system overview

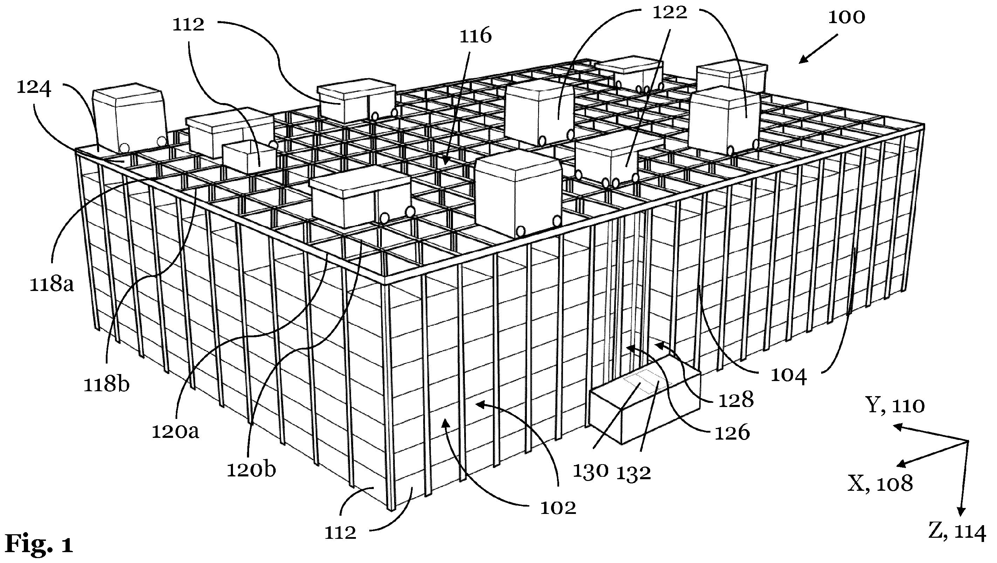

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (also referred to as container-handling robotic vehicles), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

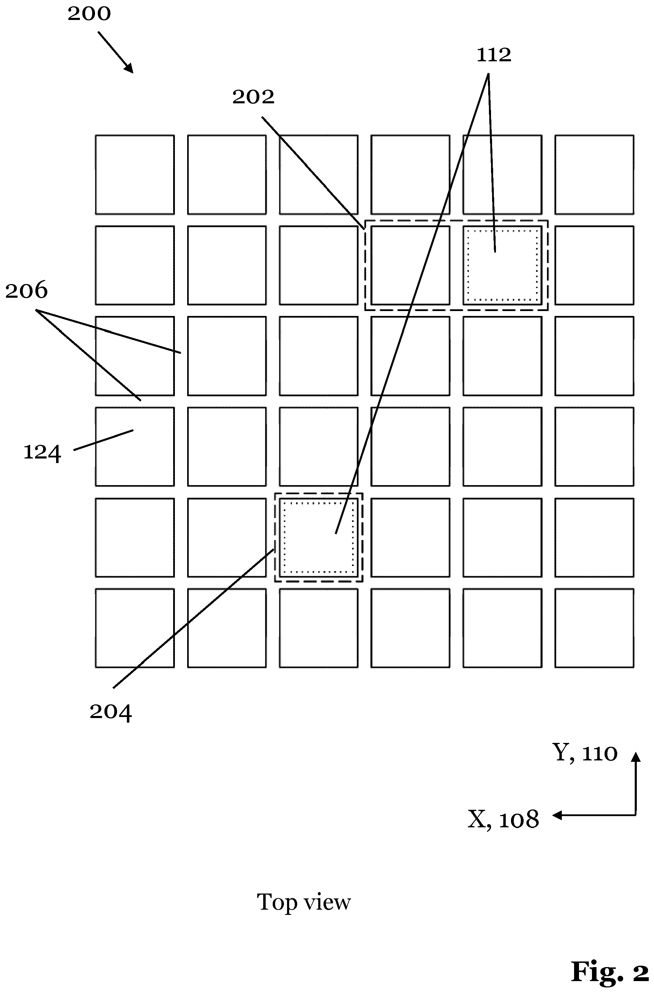

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

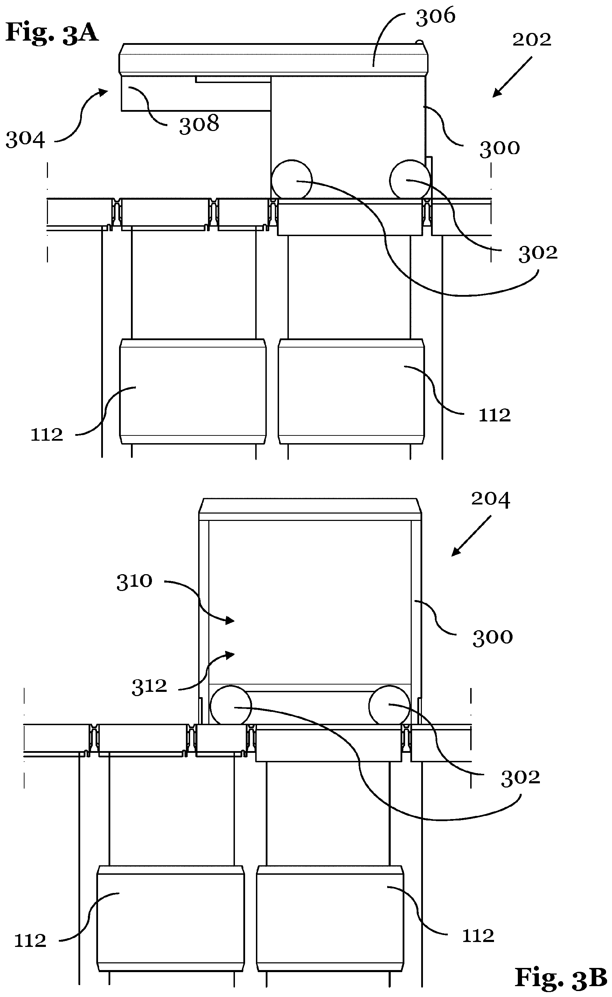

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

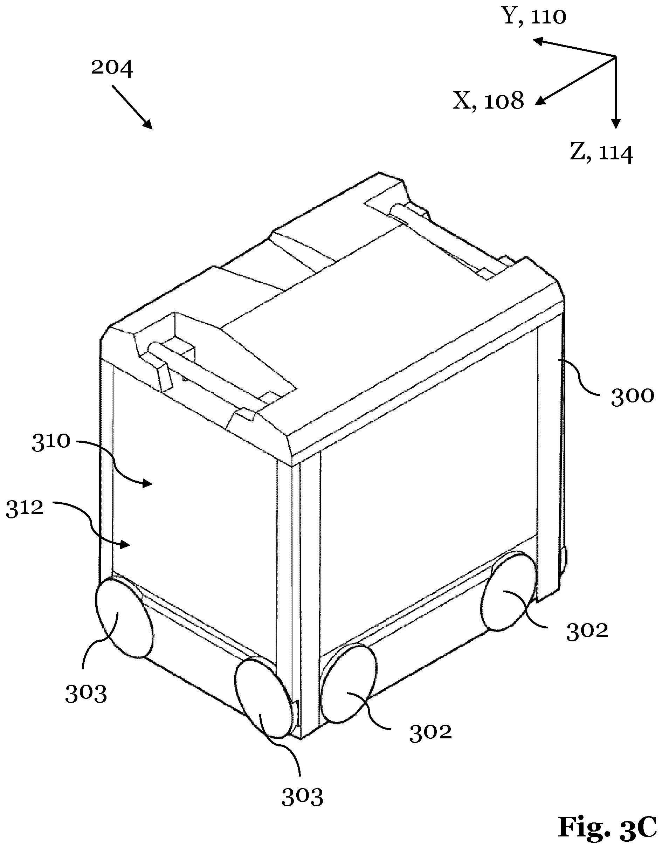

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

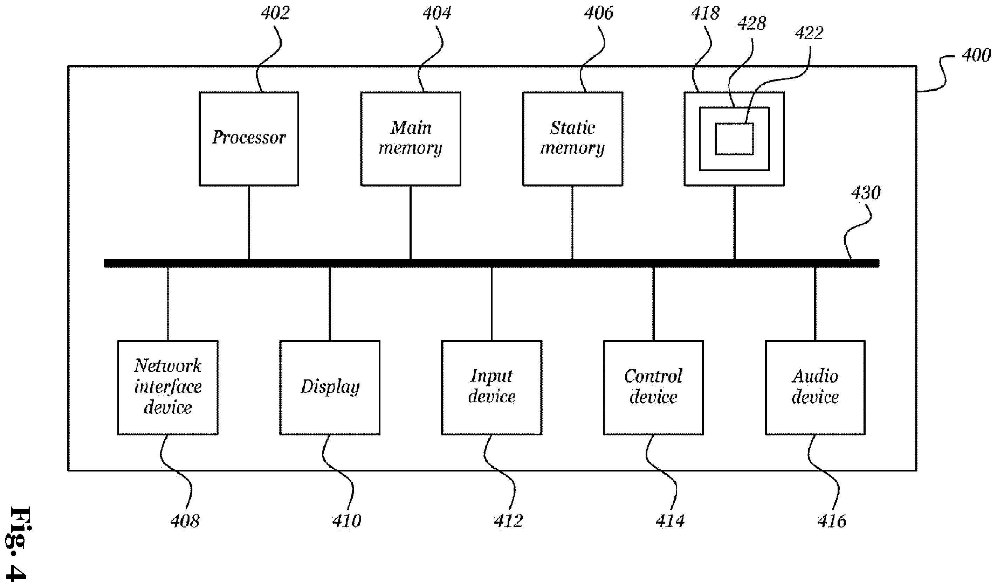

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Item Retrieval

The present disclosure will now be described in general terms before implementations of the disclosure are described by way of example with reference to the drawings. The words "may" and "can" are used to refer to a feature that is optional, i.e. in some implementations of the disclosure, the feature is present, and in some implementations of the disclosure, the feature is not present.

As described, in an item retrieval procedure, items can be retrieved from the automated storage and retrieval system by controlling a container-handling robotic vehicle to collect a container and deliver the container to a port; a human operator can then retrieve the target item from the container. The container can then be returned to the automated storage and retrieval system, where it is collected from the port and delivered to a storage cell in the grid.

The automated storage and retrieval system can also be configured such that items are retrieved by other procedures.

In an alterative item retrieval procedure to that already described, an item-picking robotic vehicle can traverse the automated storage and retrieval system to retrieve the item from a source container. A first robotic item retrieval device can be attached to the item-picking robotic vehicle. The first robotic item retrieval device is configured to retrieve items from containers in the automated storage and retrieval system.

In another alternative item retrieval procedure, a container-handling robotic vehicle can traverse the automated storage and retrieval system to retrieve a source container containing an item. The container-handling robotic vehicle can then deliver the source container to a second robotic item retrieval device. The second robotic item retrieval device can retrieve the item from the source container. The second robotic item retrieval device can be a robotic device located at a fixed position within the automated storage and retrieval system and configured to retrieve items from containers.

In another alternative item retrieval procedure a container-handling robotic vehicle can traverse the automated storage and retrieval system to retrieve a source container containing an item. The container-handling robotic vehicle can then deliver the source container to a port. The port can be configured to remove and insert containers to/from of the automated storage and retrieval system. A third robotic item retrieval device can be arranged at the port to retrieve the item from the source container.

The automated storage and retrieval system can be configured to perform various combinations of these item retrieval procedures. For example, the automated storage and retrieval system can be configured to perform two or more of the aforementioned retrieval procedures.

These different item retrieval procedures, and the controlling of them, is discussed in more detail subsequently.

A controller is provided. The controller can control the retrieval of items stored in the automated storage and retrieval system.

The controller can be configured to determine to retrieve an item from the automated storage and retrieval system.

The controller can be configured to determine a retrieval procedure assigned to the item.

The controller can be configured to control the automated storage and retrieval system to retrieve the item by performing the determined retrieval procedure.

The automated storage and retrieval system can be configured to perform a plurality of different retrieval procedures. The plurality of different retrieval procedures can use different types of retrieval device. Items stored in the automated storage and retrieval system can each have an assigned retrieval procedure of the plurality of retrieval procedures. The retrieval procedure assigned to each item can correspond to a predetermined complexity in retrieving the item.

The predetermined complexity in retrieving the item can be a predetermined complexity in removing the item from a container.

The predetermined complexity in retrieving an item can be determined based on at least one of: a physical attribute associated with the item and a predetermined risk level in retrieving the item.

The automated storage and retrieval system can be arranged with a plurality of containers, and items are stored in the containers. The retrieval procedures can comprise two or more of a first retrieval procedure, a second retrieval procedure, a third retrieval procedure and a fourth retrieval procedure.

The first retrieval procedure can comprise the controller controlling an item-picking robotic vehicle to traverse the automated storage and retrieval system to retrieve the item from a source container. A first robotic item retrieval device can be attached to the item-picking robotic vehicle. The first robotic item retrieval device can be configured to retrieve items from containers in the automated storage and retrieval system.

The second retrieval procedure can comprise the controller controlling a container-handling robotic vehicle to traverse the automated storage and retrieval system to retrieve the source container containing the item and to deliver the source container to a second robotic item retrieval device. The second retrieval procedure can further comprise controlling the second robotic item retrieval device to retrieve the item from the source container. The second robotic item retrieval device can be located at a fixed position within the automated storage and retrieval system and configured to retrieve items from containers.

The third retrieval procedure can comprise the controller controlling a container-handling robotic vehicle to traverse the automated storage and retrieval system to retrieve the source container containing the item and to deliver the source container to a first port. The first port can be configured to remove and insert containers and/or items therein from/tp of the automated storage and retrieval system. A third robotic item retrieval device can be arranged at the first port to retrieve the item from the source container.

The fourth retrieval procedure can comprise the controller controlling a container-handling robotic vehicle to traverse the automated storage and retrieval system to retrieve the source container containing the item and to deliver the source container to a second port. The second port can be configured to remove and insert containers and/or items therein from/to of the automated storage and retrieval system. The second port can be arranged for a human operator to retrieve the item from the source container.

The plurality of retrieval procedures can be tiered in correspondence to the complexity in retrieving an item. Higher tiers can correspond to higher adeptness or adaptability in the retrieval procedure for retrieving the item.

When controlling the automated storage and retrieval system to retrieve the item by performing the retrieval procedure assigned to the item does not successfully retrieve the item, the controller can be configured to update the assigned retrieval procedure to a higher tiered retrieval procedure. The controller can also be configured to control the automated storage and retrieval system to retrieve the item by performing the updated assigned retrieval procedure.

The second retrieval procedure can be a higher tiered item retrieval procedure than the first retrieval procedure and can be associated with items that have a higher complexity to retrieve than items associated with the first retrieval procedure.

The third retrieval procedure can be a higher tiered item retrieval procedure than the second retrieval procedure (and as such also higher tiered than the first retrieval procedure) and can be associated with items having a higher complexity to retrieve than items associated with the second retrieval procedure.

The fourth retrieval procedure can be a higher tiered item retrieval procedure than the third retrieval procedure (and as such also higher tiered than the first retrieval procedure an the second retrieval procedure) and can be associated with items having a higher complexity to retrieve than items associated with the third retrieval procedure.

In other words, the first retrieval procedure can be considered a lowest tiered item retrieval procedure associated with items having a lowest complexity to retrieve. The fourth retrieval procedure can be considered a highest tiered item retrieval procedure associated with items having a highest complexity to retrieve. The second retrieval procedure can be considered a first intermediate tiered item retrieval procedure associated with items having a higher complexity to retrieve than with the first retrieval procedure and lower complexity to retrieve than with the fourth retrieval procedure. The third retrieval procedure can be considered a second intermediate tiered item retrieval procedure associated with items having a higher complexity to retrieve than with the second retrieval procedure and lower complexity to retrieve than with the fourth retrieval procedure.

In the first retrieval procedure, the controller can be further configured to control the item-picking robotic vehicle to deposit the retrieved item in a target container.

In the second retrieval procedure the controller can be further configured to control the second item retrieval device to deposit the retrieved item in a target container.

The controller can be further configured to control a container-handling robotic vehicle to move the target container to a port of the automated storage and retrieval system after the item is deposited in the container.

The second robotic item retrieval device and the third robotic item retrieval device can be configured to perform item retrieval operations of higher complexity than the first robotic item retrieval device.

The first robotic item retrieval device can comprise a first tool configured to engage an item in a container by moving in a Z-direction towards the container, and in X- and Y-directions perpendicular to the Z-direction.

The first tool can be a suction device or a gripping claw.

The second robotic item retrieval device can comprise a second tool connected to a multi-axis robotic arm. The second tool can be configured to engage an item in a container. The multi-axis robotic arm can be configured move the second tool to engage the item. The multi-axis robotic arm can be arranged at a fixed position.

The second tool can be a suction device or a gripping claw.

The third robotic item retrieval device can comprise a third tool connected to a multi-axis robotic arm. The third tool can be configured to engage an item in a container. The multi-axis robotic arm can be configured move the third tool to engage the item. The multi-axis robotic arm can be moveably arranged relative to the port such that is a controllable to be displaced toward a container in the port in a Z-direction, and in X- and Y-directions perpendicular to the Z-direction.

The third tool can be a suction device or a gripping claw.

In a first implementation, the automated storage and retrieval system can be configured to perform each of the first retrieval procedure, the second retrieval procedure, the third retrieval procedure, and the fourth retrieval procedure. The controller can correspondingly be configured to control the automated storage and retrieval system to perform each of the first retrieval procedure, the second retrieval procedure, the third retrieval procedure, and the fourth retrieval procedure.

In alternative implementations, the automated storage and retrieval system can be configured to perform any combination of the first retrieval procedure, the second retrieval procedure, the third retrieval procedure, and the fourth retrieval procedure. The controller can correspondingly be configured to control the automated storage and retrieval system to perform any combination of the first retrieval procedure, the second retrieval procedure, the third retrieval procedure, and the fourth retrieval procedure.

In a second implementation, the automated storage and retrieval system can be configured to perform each of the first retrieval procedure, and the second retrieval procedure. The controller can correspondingly be configured to control the automated storage and retrieval system to perform each of the first retrieval procedure, and the second retrieval procedure.

In a third implementation, the automated storage and retrieval system can be configured to perform any combination of the first retrieval procedure, the second retrieval procedure, and the third retrieval procedure. The controller can correspondingly be configured to control the automated storage and retrieval system to perform any combination of the first retrieval procedure, the second retrieval procedure, and the third retrieval procedure.

In a fourth implementation, the automated storage and retrieval system can be configured to perform each of the first retrieval procedure, the second retrieval procedure, and the fourth retrieval procedure. The controller can correspondingly be configured to control the automated storage and retrieval system to perform each of the first retrieval procedure, the second retrieval procedure, and the fourth retrieval procedure.

In a fifth implementation, the automated storage and retrieval system can be configured to perform each of the first retrieval procedure, and the third retrieval procedure. The controller can correspondingly be configured to control the automated storage and retrieval system to perform each of the first retrieval procedure, and the third retrieval procedure.

In a sixth implementation, the automated storage and retrieval system can be configured to perform each of the first retrieval procedure, the third retrieval procedure, and the fourth retrieval procedure. The controller can correspondingly be configured to control the automated storage and retrieval system to perform each of the first retrieval procedure, the third retrieval procedure, and the fourth retrieval procedure.

In a seventh implementation, the automated storage and retrieval system can be configured to perform each of the first retrieval procedure, and the fourth retrieval procedure. The controller can correspondingly be configured to control the automated storage and retrieval system to perform each of the first retrieval procedure, and the fourth retrieval procedure.

In an eighth implementation, the automated storage and retrieval system can be configured to perform each of the second retrieval procedure, and the third retrieval procedure. The controller can correspondingly be configured to control the automated storage and retrieval system to perform each of the second retrieval procedure, and the third retrieval procedure.

In a ninth implementation, the automated storage and retrieval system can be configured to perform each of the second retrieval procedure, the third retrieval procedure, and the fourth retrieval procedure. The controller can correspondingly be configured to control the automated storage and retrieval system to perform each of the second retrieval procedure, the third retrieval procedure, and the fourth retrieval procedure.

In a tenth implementation, the automated storage and retrieval system can be configured to perform each of the second retrieval procedure, and the fourth retrieval procedure. The controller can correspondingly be configured to control the automated storage and retrieval system to perform each of the second retrieval procedure, and the fourth retrieval procedure.

In an eleventh implementation, the automated storage and retrieval system can be configured to perform each of the third retrieval procedure, and the fourth retrieval procedure. The controller can correspondingly be configured to control the automated storage and retrieval system to perform each of the third retrieval procedure, and the fourth retrieval procedure.

An automated storage and retrieval system is provided, and can comprise the controller. The automated storage and retrieval system can comprise any of the aforementioned features discussed with reference to automated storage and retrieval system. The controller can be configured to perform any of the associated aforementioned actions described with reference to the controller.

A method is provided. The method can be for controlling retrieval of items stored in an automated storage and retrieval system. The method can comprise determining to retrieve an item from the automated storage and retrieval system. The method can comprise determining a retrieval procedure assigned to the item. The method can comprise controlling the automated storage and retrieval system to retrieve the item by performing the determined retrieval procedure. The automated storage and retrieval system can be configured to perform a plurality of different retrieval procedures using different types of retrieval device. Items stored in the automated storage and retrieval system can each have an assigned retrieval procedure of the plurality of retrieval procedures. The retrieval procedure assigned to each item can correspond to a predetermined complexity in retrieving the item.

The method can also comprise any of the other aforementioned features described with reference to the controller and the automated storage and retrieval system.

A computer-readable medium is provided. The computer-readable medium can have instructions stored thereon which, when executed by one or more processors of a controller of an automated storage and retrieval, cause the controller to determine to retrieve an item from the automated storage and retrieval system. The instructions can also cause the controller to determine a retrieval procedure assigned to the item. The instructions can also cause the controller to control the automated storage and retrieval system to retrieve the item by performing the determined retrieval procedure. The automated storage and retrieval system can be configured to perform a plurality of different retrieval procedures using different types of retrieval device. Items stored in the automated storage and retrieval system can each have an assigned retrieval procedure of the plurality of retrieval procedures. The retrieval procedure assigned to each item can correspond to a predetermined complexity in retrieving the item.

The instructions can also cause the controller to perform any of the other aforementioned features described with reference to the controller and the automated storage and retrieval system.

The computer-readable medium can be a non-transitory computer-readable medium.

Each possible combination of any of the above-described features forms part of the present disclosure. A plurality of instances of any feature may also be present.

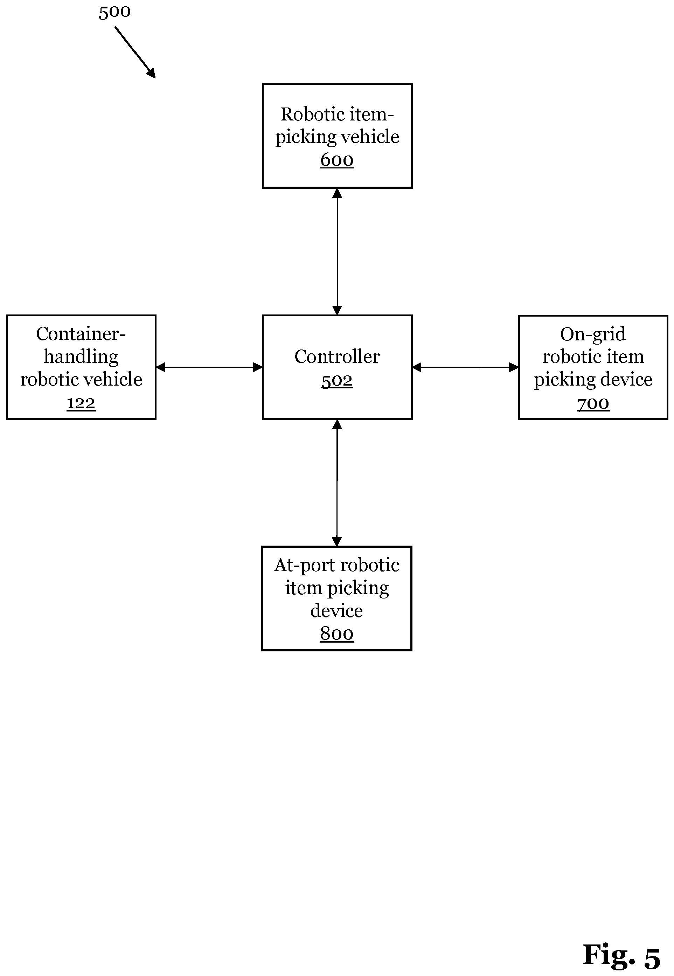

By way of example, implementations of the disclosure will now be described with reference to Figs. 5 to 11. Each possible combination of any features described below with any features described above also forms part of the disclosure.

Fig. 5 shows a block diagram of components involved in an implementation of a system 500 for item retrieval, and the control thereof, in an automated storage and retrieval system.

The system includes a controller 502, a container-handling robotic vehicle 122, a robotic item-picking vehicle 600, an on-grid robotic item-picking device 700, and an at-port robotic item-picking device 800.

While Fig. 5 shows a single container-handling robotic vehicle 122, a single robotic item-picking vehicle 600, a single on-grid robotic item-picking device 700, and a single at-port robotic item-picking device 800, it will be readily understood that system can comprise one or more container-handling robotic vehicles 122, one or more robotic item-picking vehicles 600, one or more on-grid robotic item-picking devices 700, and one or more at-port robotic item-picking devices 800.

The controller 502 controls the retrieval of items stored in the automated storage and retrieval system. In an example, the controller can be implemented as described with reference to the processing system 400 of Fig. 4, and for brevity this detail is not repeated here.

The container-handling robotic vehicle is configured to retrieve, transport and store containers in the automated storage and retrieval system. In examples, the container-handling robotic vehicle is implemented as described with reference to the container-handling robotic vehicles of Figs. 3A to 3C, and for brevity this detail is not repeated here. A communication channel exists between the controller and the container-handling robotic vehicle. The controller sends instructions to the container-handling robotic vehicle. Such instructions include instructions to traverse the grid in various directions to various destinations, as well as instructions to engage and retrieve containers, and instructions to release and deposit/store containers. The communication channel is wireless communication channel, such as a Wi-Fi communication channel or IEEE 802.1 type channel.

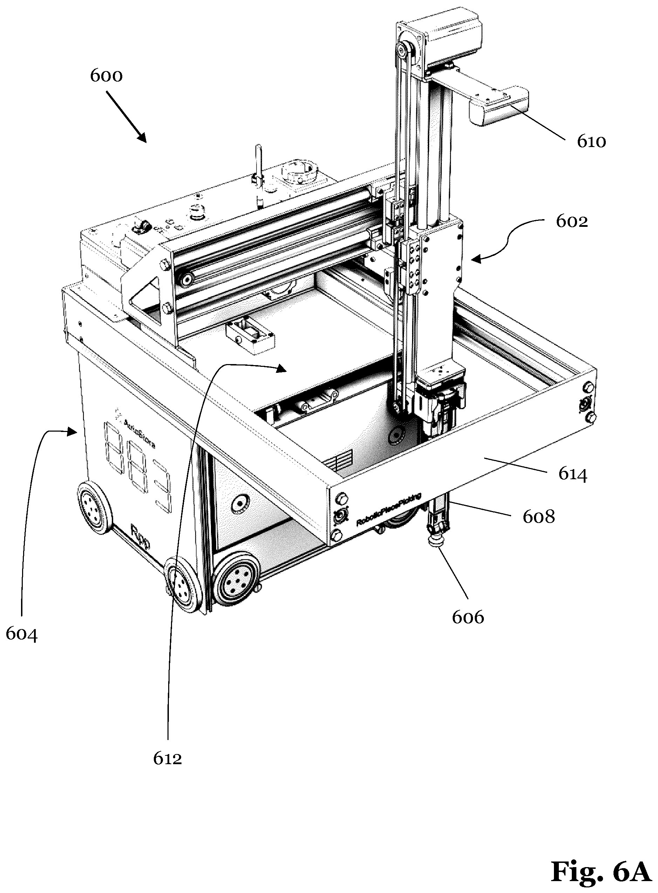

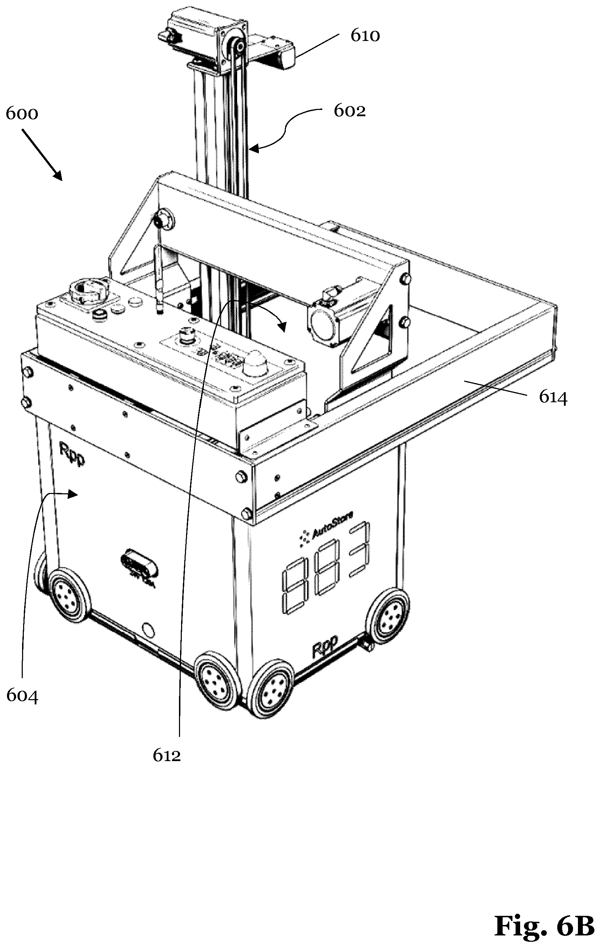

Fig. 6A shows a first perspective view of an exemplary robotic item-picking vehicle 600. Fig. 6B shows a second perspective view of the robotic item-picking vehicle 600. The robotic item-picking vehicle 600 is capable of traversing the automated storage and retrieval system in a similar manner to that described for the container-handling robotic vehicle 202, 204, and as such the detail is not repeated here for brevity.

The robotic item-picking vehicle is configured in a similar manner to the container-handling robotic vehicle 202 of Fig. 3A. However, the gripping 308 and lifting devices 304 (for gripping and lifting containers) are replaced by a first robotic item retrieval device 602. The first robotic item retrieval device 602 is attached to and extends from the main body 604 of the robotic item-picking vehicle 600.

The first robotic item retrieval device is configured to retrieve items from within source containers. For this, the containers within the automated storage and retrieval system can be configured as open containers 112 such that the first robotic item retrieval device can reach into the container to retrieve items.

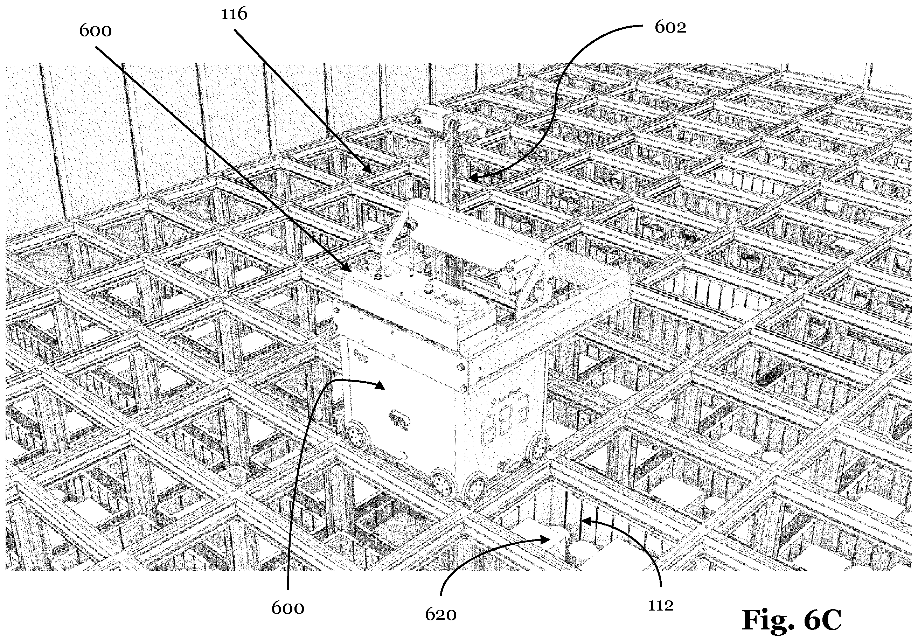

Fig. 6C shows a perspective view of the robotic item-picking vehicle 600 in operation on the rail system 116 of the grid 100. The robotic item-picking vehicle 600 uses the first robotic item retrieval device 602 to extract items from the containers 112 located beneath it by reaching through the openings in the rail system 116.

The first robotic item retrieval device 602 is a tool configured as a suction cup 606 mounted on an arm 608 that is movable on in a Z-direction into the source container, and in an X-direction and a Y-direction perpendicular to the Z-direction to be aligned with an item within the source container. A camera 610 is positioned above the suction cup 606 and an on- board controller guides the suction cup 606 to the item based on an image feed from the camera 610.

A drawer 612 is arranged internally to the robotic item-picking vehicle 600. When the suction cup 606 has engaged the item that is to be retrieved from the source container, the item is released from the suction cup 606 into the drawer 612. The robotic item-picking vehicle 600 is capable of traversing the automated storage and retrieval system carrying the item. The robotic item-picking vehicle may retrieve one or more items. The one or more retrieved items are then deposited in a target container by opening the drawer 611.

A protection frame 614 surrounds the first robotic item retrieval device 602 to protect the first robotic item retrieval device 602 in the event of a collision.

In an alternative, a gripping claw is used as the tool, instead of the suction cup 606.

A communication channel exists between the controller 502 and the robotic item-picking vehicle 600. The controller 502 sends instructions to the robotic item-picking vehicle 600. Such instructions include instructions to traverse the grid in various directions to various destinations, as well as instructions to retrieve items from containers using the first robotic item retrieval device 602, and instructions to deposit retrieved items. The communication channel is wireless communication channel, such as a Wi-Fi communication channel or IEEE 802.1 type channel.

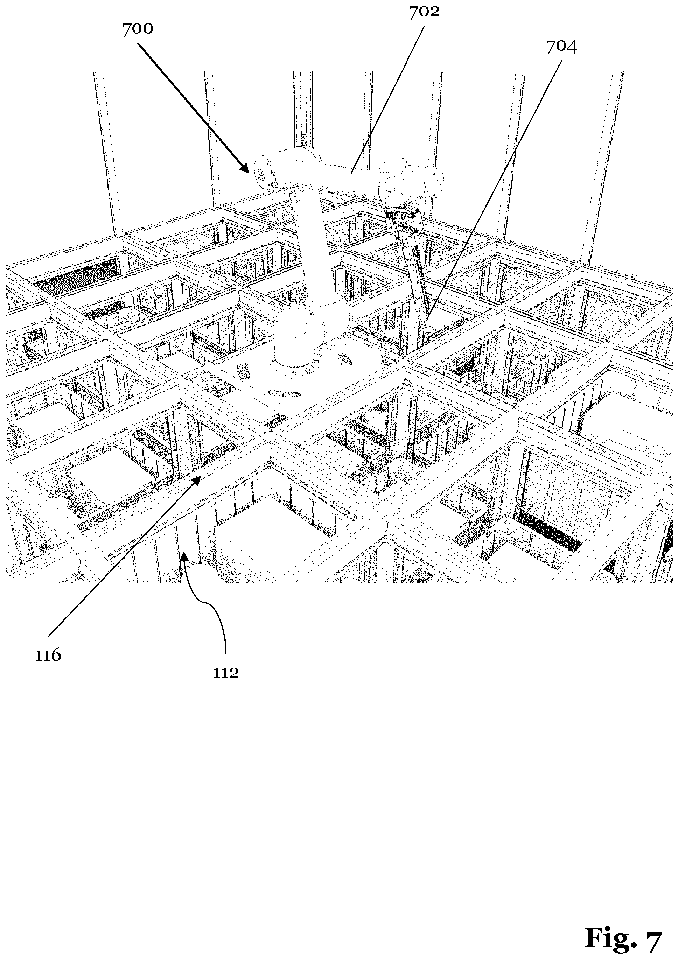

Fig. 7 shows a perspective view of a second robotic item retrieval device 700.

The second robotic item retrieval device is an on-grid robotic item-picking device 700.

The on-grid robotic item-picking device 700 is configured to retrieve items from containers on or in the grid (i.e., within the automated storage and retrieval system).

In the example of Fig. 7, the on-grid robotic item-picking device is stationarily mounted on a cell in the grid, to retrieve items from containers. The on-grid robotic item-picking device is on the rail system 116, above the containers 112. Alternatively, the on-grid robotic item-picking device is stationarily mounted on a sidewall of the grid to retrieve items from containers.

The on-grid robotic item-picking device 700 comprises a tool 704 connected to a multi-axis robotic arm 702. In an example, the multi-axis robotic arm is an 8-axis robotic arm.

The tool 704 is configured to engage an item in a container delivered to the on-grid robotic item-picking device 700. The tool is a suction cup 704. The multi-axis robotic arm 702 is configured move the suction cup 704 to engage the item. A camera can be mounted on or proximal to the multi-axis robotic arm 702. An on-grid robotic item-picking device controller guides the suction cup 704 to the item based on an image feed from the camera.

The multi-axis robotic arm 702 moves the suction cup 704 into a source container and engages the target item. The suction cup 704 engages the item and lifts it from the source container. The multi-axis arm 702 then moves the suction cup 704 (and item) to a target container where the suction cup 704 releases the item to place the item in the target container.

In an alternative, a gripping claw is used as the tool, instead of the suction cup 704.

A communication channel exists between the controller 502 and the on-grid robotic item-picking device 700. The controller 502 sends instructions to the on-grid robotic item-picking device 700. Such instructions include instructions to engage and release (i.e., pick up and deposit) items from containers. The communication channel is a wired communication channel, or a wireless communication channel, such as a Wi-Fi communication channel or IEEE 802.1 type channel.

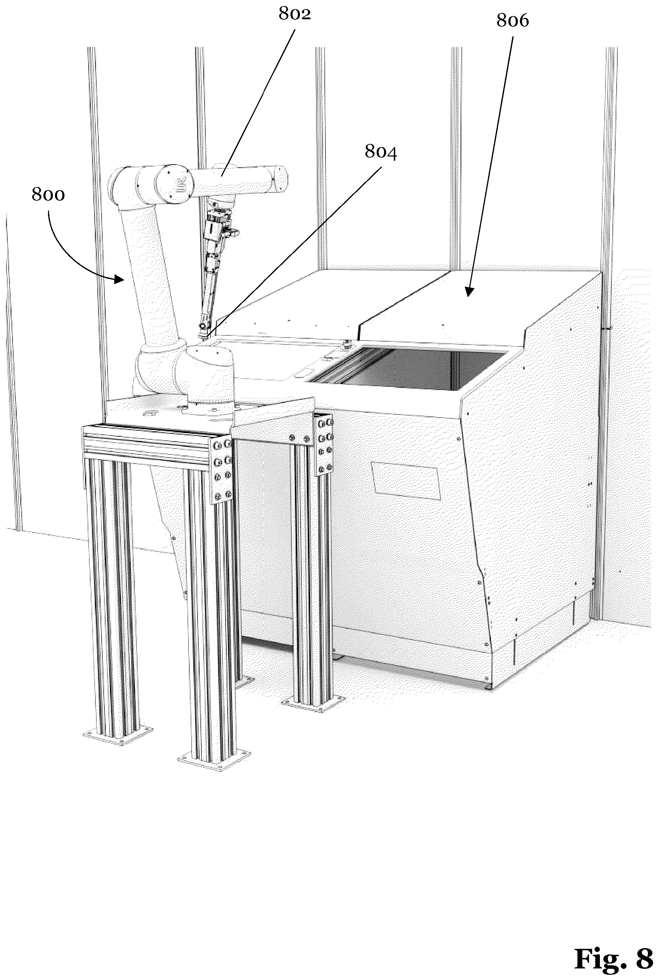

Fig. 8 shows a perspective view of a third robotic item retrieval device 800.

The third robotic item retrieval device is an at-port robotic item-picking device 800.

The at-port robotic item-picking device 800 is arranged at a port 806 of the automated storage and retrieval system configured to retrieve items from containers at the port 806.

The at-port robotic item-picking device 800 can be moveably positioned at a port 806.

The at-port robotic item-picking device 800 comprises a tool 804 connected to a multi-axis robotic arm 802. In an example, the multi-axis robotic arm is an 8-axis robotic arm.

The tool 804 is configured to engage an item in a container delivered to the port. The tool is a suction cup 804. The multi-axis robotic arm 802 is configured move the suction cup 804 to engage the item. A camera can be mounted on or proximal to the multi-axis robotic arm 802. An at-port robotic item-picking device controller guides the suction cup 804 to the item based on an image feed from the camera.

The multi-axis robotic arm 802 can be movably mounted at the port 806 so that the multi-axis robotic arm 802 itself can be moved relative to the port 806. The movable mounting (not shown) allows for the multi-axis robotic arm 802 itself to be moved in at least one of a Z-direction (up and down), an X-direction (perpendicular to the Z-direction), and/or a Y-direction (perpendicular to the X-direction and the Z-direction) For example, this can be brought about by mounting the multi-axis robotic arm on a moveable platform.

The multi-axis robotic arm 802 moves the suction cup 804 into the source container delivered to the port 806 and engages the target item. The suction cup 804 engages the item and lifts it from the source container. The multi-axis arm 802 then moves the suction cup 804 (and item) to a target area where the suction cup 804 releases the item. For example, the target area is a shipping box into which the item is to be placed for distribution.

In an alternative, a gripping claw is used as the tool, instead of the suction cup.

The port 806 can be similar to the port 130, 132 described with reference to Fig. 1, with the addition of the at-port robotic item-picking device 800.

A communication channel exists between the controller 502 and the at-port robotic item-picking device. The controller 502 sends instructions to the at-port robotic item-picking device 800. Such instructions include instructions to engage and release (i.e., pick up and deposit) items from containers. The communication channel is a wired communication channel, or a wireless communication channel, such as a Wi-Fi communication channel or IEEE 802.1 type channel.

The automated storage and retrieval system can be configured to perform four different item retrieval procedures. The four item retrieval procedures use the container-handling robotic vehicle 122, the robotic item-picking vehicle 600, the on-grid robotic item-picking device 700, and the at-port robotic item-picking device 800. The controller 502 is configured to control the operation of these system entities for the four item retrieval procedures.

In the first item retrieval procedure, the controller 502 controls a robotic item-picking vehicle 600 (e.g., the robotic item-picking vehicle 600 of Fig. 6) to traverse the grid to retrieve an item from a source container.

The controller 502 controls the robotic item-picking vehicle 600 by sending instructions using the communication channel between the controller 502 and the robotic item-picking vehicle 600.

The robotic item-picking vehicle 600 uses the first robotic item retrieval device 602 to retrieve the item from the source container. The robotic item-picking vehicle 600 then traverses the grid to a target area where the item is deposited. In an example, the target area is a target container.

The controller 502 controls one or more robotic item-picking vehicles 600 to deliver one or more items to the target container, in the aforementioned manner.

When the controller 502 determines that all of the items required in the target container have been delivered to the target container, the controller 502 controls a container-handling robotic vehicle 122 to retrieve the target container and deliver it to a port 130, 132.

In the second item retrieval procedure, the controller 502 controls a container-handling robotic vehicle 122 (e.g., a container-handling robotic vehicle according to Figs. 1 and 3A to 3C) to traverse the grid to retrieve a source container that contains the target item to be retrieved. The container-handling robotic vehicle 122 is controlled to engage the container and lift the source container using the gripping device 308 and lifting device 304. The container-handling vehicle 122 is then controlled to traverse the grid 100 to deliver the source container to the on-grid robotic item-picking device 700 (e.g., the on-grid robotic item-picking device 700 of Fig. 7). The container-handling robotic vehicle 122 is then controlled to deposit the source container in/on the grid at a position proximal to the on-grid robotic item-picking device 700. The controller 502 controls the container-handling robotic vehicle 122 by sending instructions to the container-handling robotic vehicle 122 using the communication channel between the controller 502 and the container-handling robotic vehicle 122.

The controller 502 controls the on-grid robotic item-picking device 700 to retrieve the item from the source container. The on-grid robotic item-picking device 700 reaches into the source container with the multi-axis robotic arm 702 and retrieves the item using the tool 704 connected to the multi-axis robotic arm 702. The on-grid robotic item-picking device 700 then moves the tool 704 that has engaged the item, by the multi-axis robotic arm 702, to a target area where the item is to be deposited. In an example, the target area is a target container.

The controller 502 controls one or more container-handling robotic vehicles 122 to deliver one or more containers, sequentially, to the on-grid robotic item-picking device 700, in the aforementioned manner. The on-grid robotic item-picking device 700 retrieves one or more target items from each of these one or more source containers, and deposits them in the target container.

The controller 502 controls the on-grid robotic item-picking device 700 by sending instructions to the on-grid robotic item-picking device 700 using the communication channel between the controller 502 and the on-grid robotic item-picking device 700.

When the controller 502 determines that all of the items required in the target container have been deposited in the target container, the controller 502 controls a container-handling robotic vehicle 122 to retrieve the target container and deliver it to a port 130, 132.

In the third item retrieval procedure, the controller 502 controls a container-handling robotic vehicle 122 (e.g., a container-handling robotic vehicle 122 according to Figs. 1 and 3A to 3C) to traverse the grid to retrieve a source container that contains the target item to be retrieved. The container-handling robotic vehicle 122 is controlled to engage the container and lift the source container using the gripping device 308 and lifting device 304. The container-handling vehicle 122 is then controlled to traverse the grid 100 to deliver the source container to a port 806. The port is a first type of port 806. The first type of port 806 is a port at which an at-port robotic item-picking device 800 (e.g., the at-port robotic item-picking device 800 of Fig. 8) is arranged. The container-handling robotic vehicle 122 is then controlled to deposit the source container at this first type of port 806.

The controller 502 controls the container-handling robotic vehicle 122 by sending instructions to the container-handling robotic vehicle 122 using the communication channel between the controller 502 and the container-handling robotic vehicle 122.

The controller 502 controls the at-port robotic item-picking device 800 to retrieve the item from the source container. The at-port robotic item-picking device 800 reaches into the source container with the multi-axis robotic arm 802 and retrieves the item using the tool 804 connected to the multi-axis robotic arm 802. The at-port robotic item-picking device 800 then moves the tool 804 that has engaged the item, by the multi-axis robotic arm 802, to a target area where the item is to be deposited. In an example, the target area is a can be a bag or box into which the target item is packed for shipping, or a packing area where the target item is placed before being packed for shipping.

The controller 502 controls the at-port robotic item-picking device 800 by sending instructions to the at-port robotic item-picking device 800 using the communication channel between the controller 502 and the at-port robotic item-picking device 800.

When the target item has been retrieved from the source container, the controller 502 can control a container-handling robotic vehicle 122 to collect the source container from the port 806, and return the source container to a storage location in the grid 100.

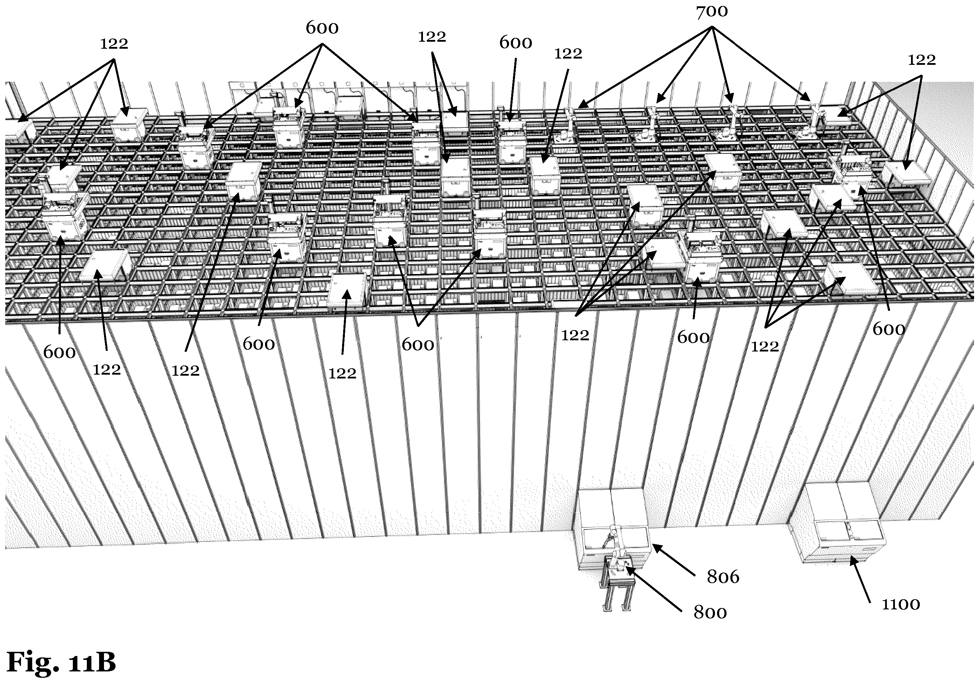

In the fourth item retrieval procedure, the controller 500 controls a container-handling robotic vehicle 122 (e.g., a container-handling robotic vehicle 122 according to Figs. 1 and 3A to 3C) to traverse the grid 100 to retrieve a source container that contains the target item to be retrieved. The container-handling robotic vehicle 122 is controlled to engage the container and lift the source container using the gripping device 308 and lifting device 304. The container-handling vehicle 122 is then controlled to traverse the grid 100 to deliver the source container to a port 1100. The port is a second type of port 1100. The second type of port 1100 is a port at which a human operator retrieves the target item from the container. This is visible in Fig. 11B. The container-handling robotic vehicle 122 is then controlled to deposit the source container at this second type of port.

The controller 502 controls the container-handling robotic vehicle 122 by sending instructions to the container-handling robotic vehicle 122 using the communication channel between the controller 502 and the container-handling robotic vehicle 122.

When the target item has been retrieved from the source container by the human operator, the controller 502 can control a container-handling robotic vehicle 122 to collect the source container from the port 1100, and return the source container to a storage location in the grid 100.

The first item retrieval procedure, the second item retrieval procedure, the third item retrieval procedure and the fourth item retrieval procedure are tiered in accordance with their adeptness or adaptability to retrieving items. That is, some items are more complex to retrieve from a container than others.

The predetermined complexity in retrieving the item is a predetermined complexity in removing the item from a source container in which it is stored.

The predetermined complexity in retrieving an item is determined based on at least one of: a physical attribute associated with the item and a predetermined risk level in retrieving the item.

For example regarding physical attributes, a smooth-sided box can have a low complexity for retrieval from a container. On the other hand, a soft jacket can have a higher complexity to retrieve as it is more difficult to engage.

For example regarding predetermined risk level in retrieving an item, a liquid containing bottle may be of a higher risk to retrieve than a solid box, and therefore be determined to be a more complex retrieval from a container. If the liquid containing bottle is dropped during the retrieval procedure, glass and/or liquid could contaminate nearby areas, and is therefore a higher risk. On the other hand, if the solid box is dropped during the retrieval procedure, there is a lower risk of impact on other parts of the automated storage and retrieval system.

Predetermined complexity in retrieving an item can also be based on where the item is stored. If the item is stored in the top layer of stacked containers, it can be predetermined as less complex to retrieve than an item in a lower layer of stacked containers.

The first item retrieval procedure can be considered as a 'level one' retrieval procedure.

The second item retrieval procedure can be considered as a 'level two' retrieval procedure.

The third item retrieval procedure can be considered as a 'level three' item retrieval procedure.

The fourth item retrieval procedure can be considered as a 'level four' item retrieval procedure.

The first item retrieval procedure is used to perform the least complex item retrievals.

The fourth item retrieval procedure is used to perform the most complex item retrievals.

The second item retrieval procedure is used to perform item retrievals that are more complex than those performed with the first item retrieval procedure, but less complex than those performed with the third item retrieval procedure and the fourth item retrieval procedure.

The third item retrieval procedure is used to perform item retrievals that are more complex than those performed with the first item retrieval procedure and the second item retrieval procedure, but less complex than those performed with the fourth item retrieval procedure.

The more complex an item is to retrieve from a container, the higher the level of retrieval procedure used to retrieve the item. That is, level one is for the least complex item retrievals, and the levels sequentially increase from level one to level two to level three to level four as the item retrievals become more complex, with level four being for the most complex item retrievals.

The first retrieval procedure (i.e., the level one retrieval procedure) is quick, because it does not require a container to be removed from, and returned to, a stack of containers. This time-saving allows for greater efficiency in fulfilling item retrieval requests.

The second retrieval procedure (i.e., the level two retrieval procedure) is more adept to performing complex item retrievals than the first retrieval procedure.

The multi-axis arm 702 of the on-grid robotic item-picking device 700 has greater freedom of movement than the first robotic item retrieval device 602 on the item-picking robotic vehicle 600 used in the first retrieval procedure. The on-grid robotic item-picking device 700 can therefore pick items from a container that are more difficult to engage than those that the first robotic item retrieval device 602 on the item-picking robotic vehicle 600 can engage.

The second retrieval procedure is suitable for more complex item retrieval procedures that involve retrieving an item from a container that is beneath the top container in a stack. In the second retrieval procedure, container-handling robotic vehicles 122 are capable of digging in the container stack for such a deeper container and then delivering such a container to the on-grid robotic item-picking device 700. The on-grid robotic item-picking device 700 then retrieves the target item from the container.

The third retrieval procedure (i.e., the level three retrieval procedure) is more adept to performing complex item retrievals than the second retrieval procedure.

The at-port robotic item-picking device 800 having a combination of a multi-axis robotic arm 802 and the multi-axis robotic arm 802 being movably mounted at the port 806 allows for greater freedom of movement than the on-grid robotic item-picking device 700.

The third retrieval procedure is suitable for more complex item retrieval procedures that involve retrieving an item that has a higher associated risk. For example, this could be an item such as a bottle containing a liquid. Retrieving such an item using the first retrieval procedure or the second retrieval procedure (i.e., on the grid) has a greater risk because if the bottle dropped there can be consequences in that broken glass and/or liquid can enter one or more containers proximal to the container that is being picked from, potentially damaging other items therein. Liquid can also be deposited on the grid which can affect acceleration and deceleration of vehicles moving thereon. This can result in system downtime, negatively impacting storage and retrieval efficiency. The third retrieval procedure is more suitable for performing such complex retrieval operations because retrieving the item from the container at the port mitigates this risk of contaminating other containers and/or the grid system if the item is dropped.

The fourth retrieval procedure (i.e., the level four retrieval procedure) is more adept to performing complex item retrievals than the third retrieval.

In the fourth retrieval procedure, the container is delivered to a human-operated port 1100. At the human-operated port 1100, a human operator is capable of manually retrieving the item from the container.

The fourth retrieval procedure allows for complex retrievals such as for very delicate items that should be handled particularly carefully by a human and are not suited to robotic picking. In the fourth retrieval procedure, these items can be delivered to the human-operated port 1100 within the container, and subsequently manually retrieved by a human

The fourth retrieval procedure also allows for complex retrievals for items that may be readily engageable by a robotic picking device, such as soft items. These items can be presented at a human-operated port 1100, in the container, by the fourth retrieval procedure to be subsequently manually retrieved by a human.

The fourth retrieval procedure also allows for complex retrievals for items that may be stuck in a container, for example lodged in place by another item. The container can be delivered to the human-operated port 1100 by the fourth retrieval procedure for the stuck item(s) to be subsequently manually retrieved by a human.

The fourth retrieval procedure is also suitable for complex item retrieval procedures that involve retrieving an item that has a higher associated risk, in a similar manner to the third item retrieval procedure, because the item is retrieved from the container at the port rather than on the grid.

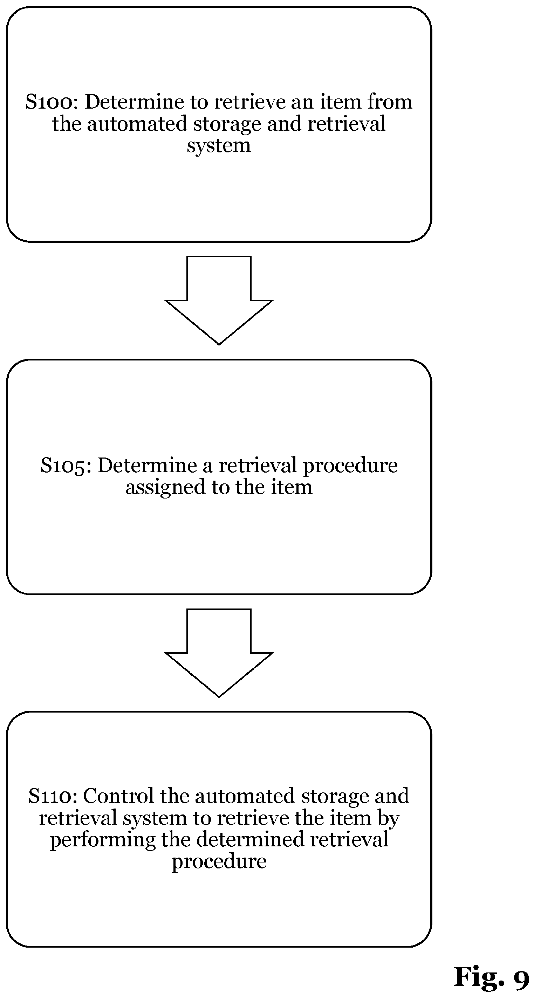

Fig. 9 shows a flow chart of a high-level process by which the controller controls the automated storage and retrieval system to retrieve an item.

At step S100, the controller 502 determines to retrieve an item from the automated storage and retrieval system.

In an example, the controller 502 determines to retrieve the item in response to an instruction to retrieve the item.

At step S105, the controller 502 determines a retrieval procedure assigned to the item.

The automated storage and retrieval system is configured to perform a plurality of different retrieval procedures using different types of retrieval device. Items stored in the automated storage and retrieval system each have an assigned retrieval procedure of the plurality of retrieval procedures. The retrieval procedure assigned to each item corresponds to a predetermined complexity in retrieving the item.

In an example, the controller 502 determines the retrieval procedure assigned to the item by accessing a datastore accessible by the controller 502. The datastore contains one or more lists of items stored in the automated storage and retrieval system, with corresponding assigned retrieval procedures for each item. In an alternative example, an instruction to retrieve the item also includes the assigned retrieval procedure for the item.

In an example, the retrieval procedures comprise the first retrieval procedure, the second retrieval procedure, the third retrieval procedure and the fourth retrieval procedure described above. The different types of retrieval device comprise the container-handling robotic vehicle 122, the robotic item-picking vehicle 600, the on-grid robotic item-picking device 700, and the at-port robotic item-picking device 800.

In alternatives, the retrieval procedures comprise at least two of the first retrieval procedure, the second retrieval procedure, the third retrieval procedure and the fourth retrieval procedure described above.

At step S110, the controller 502 controls the automated storage and retrieval system to retrieve the item by performing the determined retrieval procedure.

By controlling the automated storage and retrieval system to use specific item retrieval procedures associated with items, based on the complexity in retrieving the item, item retrieval speed enhanced whilst also being balanced with improved success rates in item retrieval and inhibiting system downtime. Consequently, improved storage and retrieval efficiency is brought about.

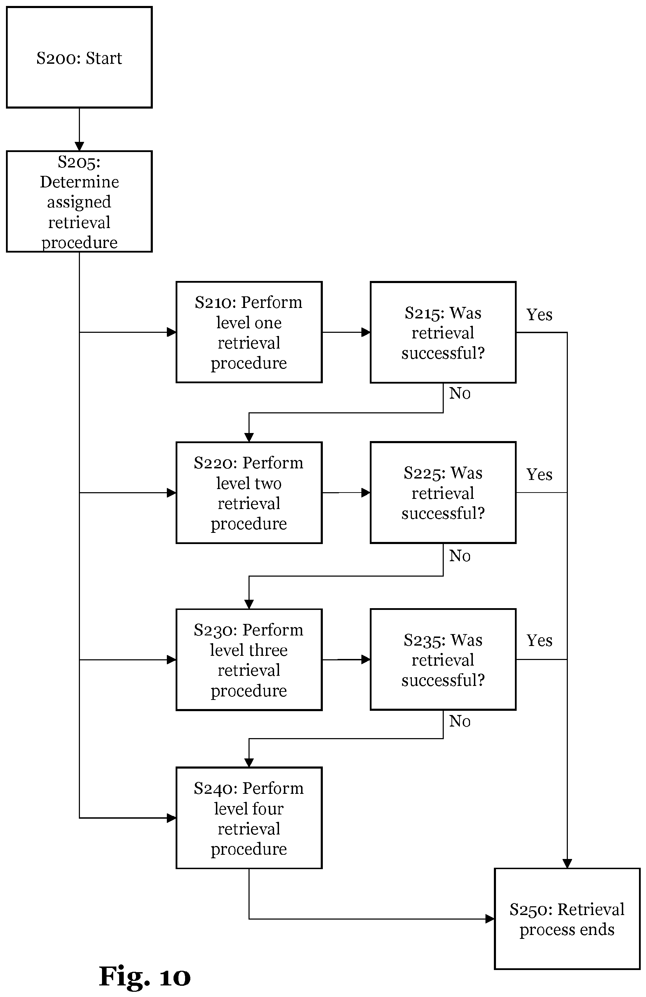

Fig. 10 shows a flow chart of a detailed implementation of the high-level process described with reference to Fig. 9.

The steps of Fig. 12 are performed by the controller 502 in controlling the retrieval of an item from the automated storage and retrieval system.

At step S200 the process begins by the controller 502 determining to retrieve an item stored in the automated storage and retrieval system, in response to receiving an instruction to retrieve the item.

For example, the instruction is sent by a warehouse management system that interacts with a customer ordering system. The instructions can comprise a list of one or more items to be compiled for a shipment.

At step S205, the controller 502 determines the retrieval procedure assigned to the item. The controller 502 accesses a datastore of items and performs a look-up to determine the retrieval procedure assigned to the item. Alternatively, the controller 502 determines the retrieval procedure assigned to the item from the received instruction to retrieve the item (that is, the assigned retrieval procedure is indicated in the instruction).

Retrieval procedures can assigned to items when they are input to the automated storage and retrieval system during a goods-in process. For example, an item can be assigned the level one, level two, level three or level four retrieval procedure.

When the controller 502 determines that the level one retrieval procedure is the retrieval procedure assigned to the item, the process progresses from step S205 to step S210.

When the controller 502 determines that the level two retrieval procedure is the retrieval procedure assigned to the item, the process bypasses the level one retrieval procedure and progresses from step S205 to step S220.

When the controller 502 determines that the level three retrieval procedure is the retrieval procedure assigned to the item, the process bypasses the level one and level two retrieval procedures and progresses from step S205 to step S230.

When the controller 502 determines that the level four retrieval procedure is the retrieval procedure assigned to the item, the process bypasses the level one, level two and level three retrieval procedures and progresses from step S205 to step S240.

At step S210, the controller 502 controls the automated storage and retrieval system to perform the level one retrieval procedure (i.e., the first retrieval procedure described earlier).

Following step S210, at step S215, the controller 502 determines whether the level one retrieval procedure was successful in retrieving the item.

When the robotic item-picking vehicle 600 retrieves the item, the level one retrieval procedure is considered successful. The robotic item-picking vehicle 600 sends a signal to the controller 502 via the communication channel between the robotic item-picking vehicle 600 and the controller 502 indicating that the retrieval was successful. The controller 502 determines from the received signal that the level one retrieval procedure was successful in retrieving the item. In response to determining that the retrieval was successful, the process continues to step S250.

When the robotic item-picking vehicle 600 cannot retrieve the item, the level one procedure is considered unsuccessful. The robotic item-picking vehicle 600 sends a signal to the controller 502 via the communication channel between the robotic item-picking vehicle 600 and the controller 502 indicating that the retrieval was not successful. The controller 502 determines from the received signal that the level one retrieval procedure was not successful in retrieving the item. In response to determining that the retrieval was not successful, the controller 502 escalates the retrieval procedure to level two, and the process continues to step S220.

At step S220, the controller 502 controls the automated storage and retrieval system to perform the level two retrieval procedure (i.e., the second retrieval procedure described earlier).

When escalating the retrieval procedure to level two, following an unsuccessful preceding lower level retrieval attempt, the controller 502 can control a container-handling robotic vehicle 122 to retrieve the source container from the location of the unsuccessful retrieval in the preceding retrieval attempt. When beginning the retrieval procedure at level two (i.e., when bypassing lower levels due to the assigned retrieval procedure being level three), the controller 502 can control a container-handling robotic vehicle 122 to retrieve the source container from a storage location of the container in the grid 100. The level three retrieval procedure then proceeds as described earlier.

Following step S220, at step S225, the controller 502 determines whether the level two retrieval procedure was successful in retrieving the item.

When the on-grid robotic item-picking device 700 retrieves the item, the level two retrieval procedure is considered successful. The on-grid robotic item-picking device 700 sends a signal to the controller 502 via the communication channel between the on-grid robotic item-picking device 700 and the controller 502 indicating that the retrieval was successful. The controller 502 determines from the received signal that the level two retrieval procedure was successful in retrieving the item. In response to determining that the retrieval was successful, the process continues to step S250.

When the on-grid robotic item-picking device 700 cannot retrieve the item, the level two procedure is considered unsuccessful. The on-grid robotic item-picking device 700 sends a signal to the controller 502 via the communication channel between the on-grid robotic item-picking device 700 and the controller 502 indicating that the retrieval was not successful. The controller 502 determines from the received signal that the level two retrieval procedure was not successful in retrieving the item. In response to determining that the retrieval was not successful, the controller 502 escalates the retrieval procedure to level three, and the process continues to step S230.

At step S230, the controller 502 controls the automated storage and retrieval system to perform the level three retrieval procedure (i.e., the third retrieval procedure described earlier).

When escalating the retrieval procedure to level three, following an unsuccessful preceding lower level retrieval attempt, the controller 502 can control a container-handling robotic vehicle 122 to retrieve the source container from the location of the unsuccessful retrieval in the preceding retrieval attempt. When beginning the retrieval procedure at level three (i.e., when bypassing lower levels due to the assigned retrieval procedure being level three), the controller 502 can control a container-handling robotic vehicle 122 to retrieve the source container from a storage location of the container in the grid 100. The level three retrieval procedure then proceeds as described earlier.

Following step S230, at step S235, the controller 502 determines whether the level three retrieval procedure was successful in retrieving the item.

When the at-port robotic item-picking device 800 retrieves the item, the level three retrieval procedure is considered successful. The at-port robotic item-picking device 800 sends a signal to the controller 502 via the communication channel between the at-port robotic item-picking device 800 and the controller 502 indicating that the retrieval was successful. The controller 502determines from the received signal that the level three retrieval procedure was successful in retrieving the item. In response to determining that the retrieval was successful, the process continues to step S250.

When the at-port robotic item-picking device 800 cannot retrieve the item, the level three procedure is considered unsuccessful. The at-port robotic item-picking device 800 sends a signal to the controller 502 via the communication channel between the at-port robotic item-picking device 800 and the controller 502 indicating that the retrieval was not successful. The controller 502 determines from the received signal that the level three retrieval procedure was not successful in retrieving the item. In response to determining that the retrieval was not successful, the controller 502 escalates the retrieval procedure to level four, and the process continues to step S240.

At step S240, the controller controls the automated storage and retrieval system to perform the level four retrieval procedure (i.e., the fourth retrieval procedure described earlier).

When escalating the retrieval procedure to level four, following an unsuccessful preceding lower level retrieval attempt, the controller 502 can control a container-handling robotic vehicle 122 to retrieve the source container from the location of the unsuccessful retrieval in the preceding retrieval attempt. When beginning the retrieval procedure at level four (i.e., when bypassing lower levels due to the assigned retrieval procedure being level four), the controller 502 can control a container-handling robotic vehicle 122 to retrieve the source container from a storage location of the container in the grid 100. The level four retrieval procedure then proceeds as described earlier.

The successful retrieval of the target item at step S240 can be confirmed by the human operator inputting an indication at a console at the port 1100 that the item has been retrieved. This indication can then be communicated to the controller 502 via a communication channel between the port 1100 and the controller 502.

Following the successful retrieval of the target item using the level four procedure, at step S240, the process continues to step S250.

At step S250 the retrieval process for the target item ends.

In an example in which the instructions received at step S200 require a plurality of items to be retrieved, the processing steps S205 and onward can be repeated as appropriate for each target item until all of the target items have been retrieved. These item retrievals can be executed simultaneously, sequentially, or a combination of simultaneously and sequentially, depending on the availability of item retrieval devices in the system.

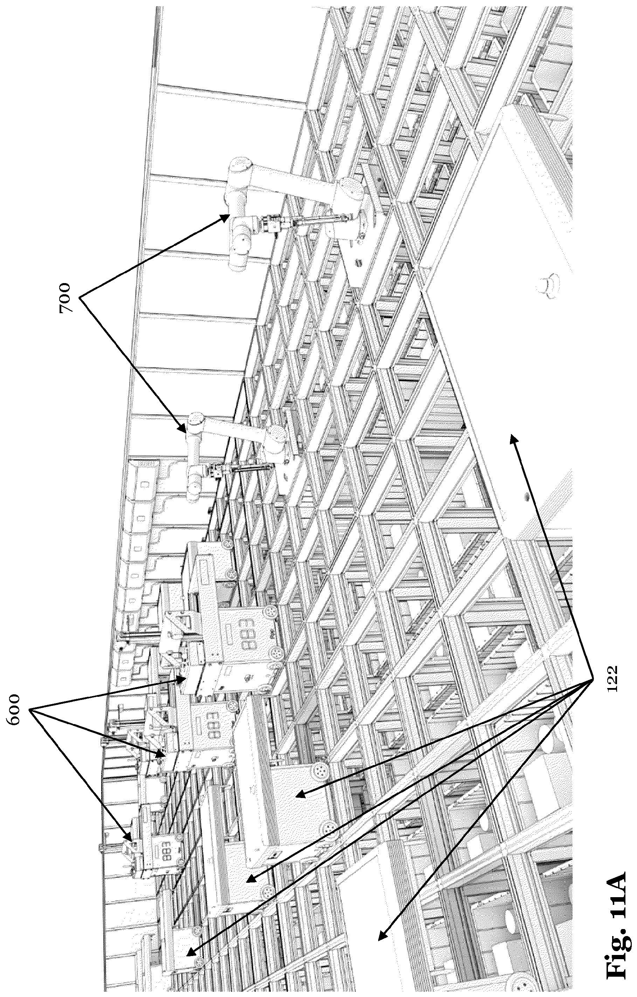

Fig. 11A shows a first perspective view of an automated storage and retrieval system configured for a plurality of retrieval procedures. Fig. 11 B shows a second perspective view of an automated storage and retrieval system configured for a plurality of retrieval procedures. The examples of Figs. 11A and 11B show a plurality of robotic item-picking vehicles 600 configured to perform the first retrieval procedure. A plurality of container-handling robotic vehicles 122 configured to contribute to performing the second retrieval procedure, third retrieval procedure and fourth retrieval procedure are shown. A plurality of on-grid robotic item-picking devices 700 configured for the second retrieval procedure are shown. An at-port robotic item-picking device 800 configured for the third retrieval procedure is shown. A human operated port 1100 configured for the fourth retrieval procedure is shown.

While the aforementioned process has been described with reference to the combination of each of the first, second, third and fourth (i.e., level one, level two, level three, level four) retrieval procedures, it will be readily appreciated that, in alternatives, the item retrieval control can be brought about by any combination (i.e., subset) of these procedures.

For example, the automated storage and retrieval system can be configured such that the item retrieval control uses:
- the first and second retrieval procedures; or
- the first, second and third retrieval procedures; or
- the first, second and fourth retrieval procedures; or
- the first and third retrieval procedures; or
- the first, third and fourth retrieval procedures; or
- the first and fourth retrieval procedures; or
- the second and third retrieval procedures; or
- the second, third and fourth retrieval procedures; or
- the second and the fourth retrieval procedures.
- the third and fourth retrieval procedures.

The first robotic item retrieval device 602 (as used in the first retrieval procedure) can be any suitable type of device for retrieving items from a container, such as a robotic arm, moveable gripping claw, moveable suction device or the like.

The second robotic item retrieval device 700 (as used in the second retrieval procedure) can be any suitable type of device for retrieving items from a container, such as a robotic arm, moveable gripping claw, moveable suction device or the like.

The third robotic item retrieval device 800 (as used in the third retrieval procedure) can be any suitable type of device for retrieving items from a container, such as a robotic arm, moveable gripping claw, moveable suction device or the like.

To perform more complex item retrievals than the first robotic item retrieval device 602, the second robotic item retrieval device 700 can be any type of retrieval device that is more adept to complex picking operations than the first robotic item retrieval device.

The second robotic item retrieval device 700 can be configured to be more adept to complex picking operations than the first robotic item retrieval device 602 by virtue of having increased movement and/or item engagement functionality.

Additionally or alternatively, the second robotic item retrieval device 700 can be more adept to complex picking operations than the first robotic item retrieval device 602 by virtue of where it is located relative to the automated storage and retrieval system.

The second robotic item retrieval device 700 can be a different type of item retrieval device to the first robotic item retrieval device 602, wherein the second robotic item retrieval device 700 is a type of device that is more adept to complex picking operations than the first robotic item retrieval device 602. For example, this can involve the second robotic item retrieval device 700 being capable of moving in more planes and/or having more axes of rotation that the first item retrieval device and/or having greater item engagement functionality.

In an alternative, the first robotic item retrieval device 602 and second robotic item retrieval device 700 are the same type of device (or substantially the same type of device). In this case, the second robotic item retrieval device 700 can be considered more adept to complex item retrieval operations because the second robotic item retrieval device 800 is capable of retrieving items from containers other than a top layer of containers in the grid. This is because the container-handling robotic vehicle 122 is configured to retrieve and deliver such containers to the second robotic item retrieval device 700.

To perform more complex item retrievals than the second robotic item retrieval device 700, the third robotic item retrieval device 800 (as used in the third item retrieval procedure) can be any type of retrieval device that is more adept to complex picking operations than the second robotic item retrieval device 700.

The third robotic item retrieval device 800 can be configured to be more adept to complex picking operations than the second robotic item retrieval device 700 by virtue of having increased movement and/or item engagement functionality.

Additionally or alternatively, the third robotic item retrieval device 800 can be more adept to complex picking operations than the second robotic item retrieval device 700 by virtue of where it is located relative to the automated storage and retrieval system.

The third robotic item retrieval device 800 can be a different type of item retrieval device to the second robotic item retrieval device 700, wherein the third robotic item retrieval device 800 is a type of device that is more adept to complex picking operations than the second robotic item retrieval device 700. For example, this can involve the third robotic item retrieval device 800 being capable of moving in more planes and/or having more axes of rotation that the second item retrieval device 700 and/or having greater item engagement functionality.

In an alternative, the second robotic item retrieval device 700 and third robotic item retrieval device 800 are the same type of device (or substantially) the same type of device. The third robotic item retrieval device 800 can then be considered to be more adept to complex picking operations because it is arranged at the port 806 rather than on the grid 100. Being arranged at the port 806 allows for more complex picking operations than at the grid because the consequences of an item retrieval failure are lower. For example, consider retrieving a bottle of liquid from a container. When performing this with a robotic item retrieval device on the grid 100, a picking failure that results in dropping the bottle can have consequences in that broken glass and/or liquid can enter one or more containers proximal to the container that is being picked from, potentially damaging other items therein. Liquid can also be deposited on the grid which can affect acceleration and deceleration of vehicles moving thereon. Performing the item retrieval at the port 806, instead, mitigates this risk of contaminating other containers and/or the grid system. As such, performing the item retrieval with a robotic item retrieval device at the port 806 is more adept to complex item retrievals than performing the item retrieval with a robotic item retrieval device on the grid 100.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A controller for controlling retrieval of items stored in an automated storage and retrieval system, the controller configured to:
determine to retrieve an item from the automated storage and retrieval system;
determine a retrieval procedure assigned to the item; and
control the automated storage and retrieval system to retrieve the item by performing the determined retrieval procedure;
wherein the automated storage and retrieval system is configured to perform a plurality of different retrieval procedures using different types of retrieval device, and items stored in the automated storage and retrieval system each have an assigned retrieval procedure of the plurality of retrieval procedures; and
the retrieval procedure assigned to each item corresponds to a predetermined complexity in retrieving the item.

2. The controller of claim 1, wherein the plurality of retrieval procedures are tiered in correspondence to the complexity in retrieving an item, and higher tiers correspond to higher adaptability in the retrieval procedure for retrieving the item.

3. The controller of claim 2, wherein when controlling the automated storage and retrieval system to retrieve the item by performing the retrieval procedure assigned to the item does not successfully retrieve the item, the controller is configured to:
update the assigned retrieval procedure to a higher tiered retrieval procedure; and
control the automated storage and retrieval system to retrieve the item by performing the updated assigned retrieval procedure.

4. The controller of any preceding claim, wherein the predetermined complexity in retrieving an item is determined based on at least one of: a physical attribute associated with the item and a predetermined risk level in retrieving the item.

5. The controller of any preceding claim, wherein the automated storage and retrieval system is arranged with a plurality of containers, and items are stored in the containers, and the retrieval procedures comprise two or more of:
a first retrieval procedure, the first retrieval procedure comprising controlling an item-picking robotic vehicle to traverse the automated storage and retrieval system to retrieve the item from a source container, wherein a first robotic item retrieval device is attached to the item-picking robotic vehicle, and the first robotic item retrieval device is configured to retrieve items from containers in the automated storage and retrieval system;
a second retrieval procedure, the second retrieval procedure comprising controlling a container-handling robotic vehicle to traverse the automated storage and retrieval system to retrieve the source container containing the item and to deliver the source container to a second robotic item retrieval device, and controlling the second robotic item retrieval device to retrieve the item from the source container, wherein the second robotic item retrieval device is located at a fixed position within the automated storage and retrieval system and configured to retrieve items from containers;
a third retrieval procedure, the third retrieval procedure comprising controlling a container-handling robotic vehicle to traverse the automated storage and retrieval system to retrieve the source container containing the item, and to deliver the source container to a first port configured to remove and insert containers and/or items therein from/to of the automated storage and retrieval system, wherein a third robotic item retrieval device is arranged at the first port to retrieve the item from the source container;
a fourth retrieval procedure, the fourth retrieval procedure controlling a container-handling robotic vehicle to traverse the automated storage and retrieval system to retrieve the source container containing the item, and to deliver the source container to a second port configured to remove and insert containers and/or items therein from/to of the automated storage and retrieval system, wherein second port is arranged for a human operator to retrieve the item from the source container.

6. The controller of claim 5, wherein the second retrieval procedure is a higher tiered item retrieval procedure than the first retrieval procedure and is associated with items having a higher complexity to retrieve than items associated with the first retrieval procedure;
the third retrieval procedure is a higher tiered item retrieval procedure than the second retrieval procedure, and is associated with items having a higher complexity to retrieve than items associated with the second retrieval procedure;
the fourth retrieval procedure is a higher tiered item retrieval procedure than the third retrieval procedure, and is associated with items having a higher complexity to retrieve than items associated with the third retrieval procedure.

7. The controller of claim 5 or claim 6, wherein the controller is configured to control the automated storage and retrieval system to perform each of the first retrieval procedure, the second retrieval procedure, the third retrieval procedure and the fourth retrieval procedure.

8. The controller of any one of claims 5 to 7, wherein in the first retrieval procedure, the controller is further configured to control the item-picking robotic vehicle to deposit the retrieved item in a target container.

9. The controller of any one of claims 5 to 8, wherein in the second retrieval procedure the controller is further configured to control the second item retrieval device to deposit the retrieved item in a target container.

10. The controller of claim 8 or claim 9, wherein the controller is further configured to control a container-handling robotic vehicle to move the target container to a port of the automated storage and retrieval system after the item is deposited in the container.

11. The controller of any one of claims 5 to 10, wherein the second robotic item retrieval device and the third robotic item retrieval device are configured to perform item retrieval operations of higher complexity than the first robotic item retrieval device.

12. The controller of any one of claims 5 to 11, wherein the predetermined complexity in retrieving the item is a predetermined complexity in removing the item from a container.

13. An automated storage and retrieval system comprising the controller of any preceding claim.

14. A method for controlling retrieval of items stored in an automated storage and retrieval system, the method comprising:
determining to retrieve an item from the automated storage and retrieval system;
determining a retrieval procedure assigned to the item; and
controlling the automated storage and retrieval system to retrieve the item by performing the determined retrieval procedure;
wherein the automated storage and retrieval system is configured to perform a plurality of different retrieval procedures using different types of retrieval device, and items stored in the automated storage and retrieval system each have an assigned retrieval procedure of the plurality of retrieval procedures; and
the retrieval procedure assigned to each item corresponds to a predetermined complexity in retrieving the item.

15. A computer-readable medium with instructions stored thereon which, when executed by one or more processors of a controller of an automated storage and retrieval, cause the controller to:
determine to retrieve an item from the automated storage and retrieval system;
determine a retrieval procedure assigned to the item; and
control the automated storage and retrieval system to retrieve the item by performing the determined retrieval procedure;
wherein the automated storage and retrieval system is configured to perform a plurality of different retrieval procedures using different types of retrieval device, and items stored in the automated storage and retrieval system each have an assigned retrieval procedure of the plurality of retrieval procedures; and
the retrieval procedure assigned to each item corresponds to a predetermined complexity in retrieving the item.
